# EUROPEAN PATENT APPLICATION

(11) **EP 4 667 981 A1**
(43) Date of publication of application: **24.12.2025**
(21) Application number: 25154998.6
(22) Date of filing: 30.01.2025
(51) Int. Cl.: G01W 1/10, G01W 1/00

(54) **SYSTEM AND METHOD FOR SPACE WEATHER FORECASTING BASED ON A SATELLITE CONSTELLATION**

(30) Priority: 21.06.2024 LU 507558; 21.06.2024 US 202418749998
(71) Applicant: Mission Space S.A., 1911 Luxembourg (LU)
(72) Inventor: POSPEKHOV, Alex, Luxembourg (LU)
(74) Representative: Dennemeyer & Associates S.A.

(57) **Abstract**

This disclosure pertains to a space weather forecast system (1), comprising a space weather forecast apparatus (100), a plurality of the LEO satellites (202), and one or more ground stations (204) connected to the space weather forecast apparatus (100), the one or more ground stations (204) being further configured to send first electromagnetic signals to the LEO satellites (202), to receive second electromagnetic signals from the LEO satellites (202) and to transmit the received second electromagnetic signals to the space weather forecast apparatus (100).

## Description

### Technical field

The present disclosure pertains to systems and methods for forecasting space weather using satellite constellations and ground-based data processing infrastructure.

### Background

It is known to use satellites orbiting in geostationary orbits, in polar Earth orbits and/or located at the first Earth-Sun Lagrange point, these satellites being equipped with advanced sensors for forecasting space weather, space weather being defined as the conditions in space influenced by the activity of the Sun, including solar flares, coronal mass ejections, and solar wind, which can affect satellites, technology on Earth, and human health. Space weather can also disrupt radio communications, satellite operations, and power grids on Earth, which implies the need for appropriate forecasting.

Satellites and sensors currently in orbit provide crucial data in that regard, said data being typically processed and analyzed at ground stations. The known systems currently enable the tracking of solar activities such as coronal mass ejections and solar flares, which are critical for predicting space weather impacts on Earth. Such capabilities are vital for protecting satellites and communication systems from space weather-related disruptions. With these systems, agencies like the NOAA (National Oceanic and Atmospheric Administration) and ESA (European Space Agency) have developed robust frameworks for space weather forecasts, enhancing the reliability and accuracy of their predictions.

However, there is a need for a real-time and more precise analysis of space weather phenomena, specifically in view of studying and classifying such events depending on their properties and consequences. This includes the need for more disseminated forecasts as well as for obtaining event-focused information including linkages, relationships and cause-and-effects between space weather phenomena events and consequences on Earth or in the atmosphere.

In a first example, the US patent application No. US 15/674,016 discusses systems associated together for space weather data collection, relating to the forecasting of various space weather phenomena within outer space. Specifically, it is disclosed a system that can provide information and daily interpretations of space weather observations as provided by space weather research centers. The disclosed knowledge-based search functionalities allow supporting anomaly resolution and identifying connections between space weather activities and phenomena.

In another example, the Chinese patent application CN 117058846 A discusses solar activity forecasting and early warnings based on solar observation data. Specifically, a system is discussed as comprising a "solar observation data obtaining "module, which is used for obtaining solar observation text/image data. Another module, called "solar activity early warning issuing" module is discussed for issuing solar activity information when the solar observation text/image data meet predetermined warning conditions.

However, the existing systems have several significant disadvantages, particularly regarding the timeliness, resolution, and subsequent use of the data they provide, specifically in view of making predictions. Another drawback is that the data integration process is often slow, which hampers real-time analysis and delays the response to sudden space weather changes. This latency can be critical because the faster and more accurately one can predict space weather events, the better one can mitigate their potentially damaging effects on technology and human activities both on Earth and in space.

### Summary

To address this or these drawbacks, it is proposed according to a first aspect of the present disclosure a computer-implemented method for space weather forecasting, comprising the steps of:
a) inputting internal space weather data and external space weather data, said internal space weather data being provided by Low Earth orbit, LEO, satellites, said external space weather data being provided by ground-based databases, the providing of the internal space weather data and of the external space weather data being carried out through one or more space weather data messages,
b) computing secondary key indices from primary key indices comprised in the inputted internal space weather data and in the external space weather data,
c) adjusting the primary key indices based on the computed secondary indices,
d) extrapolating the adjusted primary key indices to predict future space weather events, and
e) generating one or more space weather event messages comprising the extrapolated
adjusted key indicators and/or the predicted future space weather data.

Herein, "Low Earth orbit", or LEO, encompasses Earth-centered orbits with an altitude of 2000 kilometers or less. Such orbits are considered near enough to Earth for convenient transportation of, communication with, observation from, and resupply of LEO satellites.

Herein, primary key indices are directly measured physical parameters essential for space weather forecasting. These indices can include solar X-ray flux measured in watts per square meter (W/m²), velocity of the solar wind in kilometers per second (km/s), and density of the solar wind in particles per cubic centimeter (particles/cm³). Additionally, they encompass geomagnetic and interplanetary magnetic field vectors measured in nanoteslas (nT), the intensity of fluxes of charged particles in energy bands, such as electron flux measured in electrons per square centimeter per second per steradian (e/cm²/sr/s) in specific areas like L1 or the radiation belts, and solar radio flux measured in solar flux units (sfu). Visible sunspot numbers can also be included as primary indices, along with well-known primary indices calculated from direct measurements, such as the disturbance storm time (Dst) index in nanoteslas, the planetary K-index (Kp) which is a dimensionless index, the solar wind dynamic pressure measured in nanopascals (nPa), the magnetopause standoff distance in Earth radii (RE), the total area of coronal holes, and NOAA's G/S/R indicators, where NOAA (National Oceanic and Atmospheric Administration) provides indices for geomagnetic (G), solar (S), and radiation (R) storms which reflect different levels of geomagnetic disturbances. These primary indices provide a basis for computing secondary indices and adjusting key indices, enabling more precise and more timely predictions of space weather events, enhancing the accuracy and reliability of space weather forecasts.

Herein, secondary key indices are derivable from primary indices. Examples include E(1), a composite whole-Earth index, and S(1), a matching composite solar wind driving function. E(1) can be calculated using a variety of geomagnetic indices such as SML, SMU, Ap60, SYMH, ASYM, and PCC, which can be measured in nanoteslas (nT) or millivolts per meter (mV/m). The Hp30 and Hp60 indices are hourly and half-hourly geomagnetic activity indices, measured in nanoteslas (nT), providing high temporal resolution without an upper limit. PCC, representing cross-polar cap potential, is typically measured in millivolts per meter (mV/m). SML and SMU can be used as improvements to the traditional AL and AU auroral electrojet indices, representing the lowest and highest values of the magnetic field perturbations in the auroral zone, respectively. SYMH is similar to the Dst index, reflecting the symmetric ring current's intensity around the Earth, while ASYM indicate the asymmetric part of the ring current. Ap60 can be a 60-minute resolution version of the planetary geomagnetic activity index Ap, which can be an average of the 3-hourly Kp index measured in nanoteslas (nT). These secondary indices can be calculated using advanced methods such as canonical correlation analysis (CCA), which can correlate multiple time-dependent variables from geomagnetic and solar wind data to derive a comprehensive measure of magnetospheric activity. The integration of these indices can allow for more accurate and detailed predictions of space weather events, as they can provide a holistic view of the magnetosphere-ionosphere system's response to solar wind variations.

Computing and using secondary key indices enhance the predictive capability and reliability of space weather forecasts, addressing the limitations of traditional primary indices by incorporating complex interactions and dependencies. By leveraging these secondary indices, one can achieve higher accuracy and better anticipate the impacts of solar wind and other space weather phenomena on Earth and its technological systems.

Herein, space weather event messages are also called space weather alert messages, and vice-versa. Herein, indices are also called indicators, and vice-versa.

According to a possible embodiment, the computer-implemented method for space weather forecasting is implemented by a space weather forecast apparatus according to one of the aspects and/or embodiment described hereafter.

According to a possible embodiment, the inputting step a) is carried out by a receiver module and/or a data preprocessing module of the space weather forecast apparatus, the internal space weather data and external space weather data being inputted in a central data repository. Preferably, the central data repository is comprised in the space weather forecast apparatus.

According to a possible embodiment, the computing step b) is carried out by a dynamical processing module interfaced with the central data repository. Preferably, the dynamical processing module is comprised in the space weather forecast apparatus.

According to a possible embodiment, the adjusting step c) is carried out by the dynamical processing module.

According to a possible embodiment, the extrapolating step d) is carried out by an extrapolation module interfaced with the dynamical processing module and the central data repository. Preferably, the extrapolation module is comprised in the space weather forecast apparatus.

According to a possible embodiment, the space weather forecast apparatus further comprises a data processing module, said data processing module being interfaced with the dynamical processing module and further having access to a model database of numerical geophysical models.

According to a possible embodiment, the adjusting of the primary key indices is also based on corrected forecast errors, said forecast errors having been identified during the inputting step.

According to a possible embodiment, the generating step comprises configuring said one or more space weather event messages to be sent to external devices. Said external devices are, preferably, devices which are external to the space weather forecast apparatus.

According to a possible alternative embodiment, the computer-implemented method for space weather forecasting, comprises the steps of:
a) inputting external space weather data, said external space weather data being provided by ground-based databases, the providing of external space weather data being carried out through one or more external space weather data messages,
b) computing external secondary key indices from primary key indices comprised in the inputted external space weather data,
c) adjusting the primary key indices based on the computed external secondary indices,
d) extrapolating the adjusted primary key indices to predict external future space weather events, and
e) generating one or more external space weather event messages comprising the extrapolated adjusted key indicators and/or the predicted external future space weather data.

This enables carrying out the method in a "disconnected" mode, for instance when it is not possible or when it is not necessary to use internal space weather data from LEO satellites. This may be the case, for example, in the event of a communication breakdown between the LEO satellites and ground stations, to save bandwidth or computing power, and therefore save energy, or to carry out a calculation of key indices not requiring recent measurements made in orbit.

The present invention aims at improving space weather forecasting by enhancing the speed and accuracy of data processing and forecasts through the integration, in a centralized database or "data lake", of measurements performed by satellites with already available data. The data from this data lake can then be processed by a central processing device, ensuring more accurate space weather forecasts. This improvement is critical for providing timely updates and alerts, which allows, at least in part, to overcome the aforementioned drawbacks of the prior art. The objective is to develop a system that not only forecasts space weather more reliably but also reduces the response time to these events, thereby significantly mitigating risks associated with space weather phenomena.

According to one embodiment, the generating step e) comprises sending, to one or more user terminals, the one or more space weather event messages to one or more user terminals.

This enables enhanced operational efficiency and decision-making processes in fields affected by space weather conditions, such as satellite operations and telecommunications.

According to one embodiment, the computer-implemented method further comprises, after the adjusting step c), an iteration step comprising repeating the computing step b) and the adjusting step c) until a predetermined condition or threshold is fulfilled and/or after a predetermined amount of time has lapsed.

This enables regular recalculations and refinements, ensuring that the data remains up-to-date and accurate, thereby maintaining the reliability of the forecasts and analyses produced by the method.

According to one embodiment, the inputting step comprises the following sub-steps: a1) uploading and preprocessing the inputted space weather data to correct errors in said inputted space weather data, a3) merging the preprocessed space weather data with provided data/metadata sets, and a4) creating a spatial grid based on the merged data to provide a spatial representation of said merged data to user terminals, said user terminals comprising a graphical user interface.

This enables a detailed preprocessing of the input data, ensuring that the data used for space weather forecasting is accurate, enriched with relevant metadata, and spatially well-represented, thereby enhancing the precision and reliability of the forecasts.

According to one embodiment, the inputting step further comprises the sub-step of a2) interpolating the preprocessed space weather data to create a continuous data set, the sub-step a2) being carried out after the uploading and preprocessing sub-step a1) and before the merging sub-step a3), the merging sub-step a3) being replaced by the sub-step a31) of merging the created continuous data set with provided data/metadata sets.

This improves the accuracy and reliability of the subsequent space weather forecasting sub-steps and steps.

According to one embodiment, the merging sub-step a3) further comprises sending a modelling message intended for a modelling generator and/or sending an alert message intended for a space weather alert generator, the modelling message or the alert message comprising the preprocessed space weather data, the provided data/metadata sets and/or the merging of the preprocessed space weather data and of the provided data/metadata sets.

This enables the integration and utilization of processed data by external systems, enhancing the overall accuracy and responsiveness of space weather predictions and alerts. This enables efficient dissemination of processed data to external systems, thereby enhancing the accuracy and timeliness of space weather forecasts and alerts.

It is proposed, according to another aspect of the present disclosure, a space weather forecast apparatus comprising: a receiver module configured to receive internal space weather data and external space weather data, said internal space weather data being provided by Low Earth orbit, LEO, satellites, said external space weather data being provided by ground-based databases, the providing of the internal space weather data and of the external space weather data being carried out through one or more space weather data messages, a central data repository, configured to process the received internal space weather data and the received external space weather data, said processing comprising the computation of secondary key indices from primary key indices comprised in the received internal space weather data and in the received external space weather data, and one or more processing modules, configured to adjust the primary key indices based on the computed secondary indices, to extrapolate the adjusted primary key indices to predict future space weather events, and to generate one or more space weather event messages comprising the extrapolated adjusted key indicators and/or the predicted future space weather data.

Herein, the central data repository is also called (centralized) "space weather data lake", or Space Weather Model Data Lake, SWMDL.

This provides an apparatus adapted to carry out the method of previous aspect and embodiments, for forecasting space weather. Specifically, such a forecasting comprises steps of operating a satellite constellation in low Earth orbit, each satellite being equipped with sensors for measuring charged particles and geomagnetic field variations. This in turn enables transmitting the acquired space weather data from the satellite constellation to a ground-based system, storing the transmitted data in the data lake, which serves as a data repository of ground-based systems. This further enables the processing of the stored data in a model core, which is also located in a ground-based system, to analyze the data and generate space weather forecasts and alerts, to present the processed data and to provide user access through a user interface, preferably connected to the ground-based system.

Advantageously, this also enables optimal processing capabilities, as numerical geophysical models can be relied upon to obtain a more accurate forecasting of space weather scenarios using the inputted data, said simulated and predicted space weather scenarios being called herein "space weather forecasts.

According to one embodiment, the receiver module comprises one or more data uploading modules, and a data preprocessing module, the one or more data uploading modules being configured to standardize the external space weather data and to upload the standardized external space weather data into the central data repository.

Herein, standardization is defined as transforming the provided data to comply with a same set of conventions. It is a problem known from the art that most experiments and measurements provide external space weather data with different parameter choices, different timesets of data, different weights of calculation and sometimes different physical units, making it difficult to compare.

In other words, this enables the space weather forecast apparatus to require less energy and computing power to subsequently compare the various data provided to him, as this standardization avoids spending energy and time to identify discrepancies between said data due to different conventions.

In a possible embodiment, standardization can be carried out by comparing the statistical distributions of each dataset of the provided external space weather data and relying on these comparisons to eliminate the possible discrepancies between them.

In a possible embodiment, the data preprocessing module is configured to standardize the received internal space weather data, whereas the one or more data uploading modules are configured to upload the standardized internal space weather data into the central data repository.

This enables the comparison between the measurement's statistical distributions and amounts, facilitating using the contents of the central data repository to merge and process data from different sources.

According to one embodiment, the one or more processing modules comprise a dynamical processing module interfaced with the central data repository, an extrapolation module interfaced with the dynamical processing module and the central data repository, and a data processing module interfaced with the dynamical processing module, the data processing module having access to a model database of numerical geophysical models.

According to one embodiment, the space weather forecast apparatus comprises a User Interface, Ul, backend configured to provide, to a Ul frontend connected to the Ul backend of the space weather forecast apparatus, the one or more space weather event messages, the extrapolated adjusted key indices and/or the predicted future space weather data.

In one embodiment, the Ul backend comprises a query manager and a web portal which are configured to provide the outputted space weather forecast key indicators to one or more APIs and/or one or more user interfaces of the Ul frontend.

In one embodiment, the UI frontend is not part of the space weather forecast apparatus but is configured to send the outputted space weather forecast key indicators to at least one external user terminal.

In one possible embodiment, space weather data comprises at least one type of data selected among payload data, geomagnetic data, magnetospheric data, interplanetary medium state data or extra magnetospheric data.

Herein, geomagnetic data comprises measurements of the strength and direction of the magnetic field of the Earth at various locations and times. Previous measurements from satellite constellations enable measuring magnetic signals from the core of the Earth, as well from the mantle, the crust, the oceans, the ionosphere, and the magnetosphere, with resolutions up to 0.1 nanoteslas and total field measurements with accuracies of about 1 nanotesla. For example, they provide information on magnetic field variations such as geomagnetic storms.

Herein, magnetospheric data comprises observations of the magnetosphere of the Earth, measuring the properties of charged particles and magnetic fields in this region. Measurements comprise magnetic field strengths in the range of tens to hundreds of nanoteslas (nT), particle densities expressed in numbers of particles per cubic centimeter (cm³), and electric currents in the range of nanoamperes per square meter (nA/m²).

Herein, interplanetary medium state data comprises measurements of the conditions in the space between planets, including solar wind properties and cosmic radiation. This data typically comprises information on solar wind speed, expressed in kilometers per second (km/s), particle density, and magnetic field strength. Such data is typically affected by phenomena that affect the interplanetary medium, such as coronal mass ejections.

Herein, extra magnetospheric data comprises observations and measurements of the regions outside the magnetosphere of the Earth, including the heliosphere and interstellar space, such data being typically affected by cosmic rays, solar wind interactions at the heliopause, and magnetic fields in these regions.

Herein, payload data is any of the aforementioned space weather data, but specifically gathered from payloads of the space weather monitoring system, such as space weather data measured by one or more satellites comprised in a LEO satellite constellation, said measured data being sent from the one or more satellites to one or more ground stations and/or one or more said distributed networks, the one or more ground stations and/or the one or more said distributed networks sending said measured data subsequently to the space weather forecast apparatus via a wired connection or via a wireless network.

According to one embodiment, the space weather forecast apparatus is adapted to be installed aboard a LEO satellite.

This enables carrying out the space weather forecasting method directly onboard one or more of the LEO satellites based on the internal and/or the external space weather data, avoiding losses or delays in data processing while the payload is in orbit.

According to one specific embodiment, the space weather forecast apparatus is adapted to be installed aboard at least one LEO satellite among said plurality of the LEO satellites.

This enables a centralized management, e.g. by the same entity, of the payload of one or more satellites when the space weather forecast apparatus is installed aboard the aboard at least one LEO satellite, of the orbit of the satellites, of the taking of measurements by the satellites, and/or of the processing of data, whether the processing is carried out on the ground or in space.

It is proposed, according to another aspect of the present disclosure, a space weather forecast system, comprising the space weather forecast apparatus according to any of the previously described embodiments, a plurality of the LEO satellites, and one or more ground stations connected to the space weather forecast apparatus, the one or more ground stations being further configured to send first electromagnetic signals to the LEO satellites, to receive second electromagnetic signals from the LEO satellites and to transmit the received second electromagnetic signals to the space weather forecast apparatus.

Herein, a plurality of LEO satellites is called a LEO satellite constellation.

According to a possible alternative embodiment, the space weather forecast system comprises the space weather forecast apparatus according to any of the previously described embodiments, a network of sensors, and one or more ground stations connected to the space weather forecast apparatus, the one or more ground stations being further configured to send first electromagnetic signals to the network of sensors, to receive second electromagnetic signals from the network of sensors and to transmit the received second electromagnetic signals to the space weather forecast apparatus.

According to various possible embodiments, the network of sensors comprises sensors able to measure magnetospheric data, geomagnetic data, extra-magnetospheric data.

According to various possible embodiments, the network of sensors comprise a distributed network of ground-based weather stations equipped with atmospheric monitoring sensors, ocean buoys measuring sea surface conditions, airborne drones collecting high-resolution atmospheric data, seismic sensors analyzing ground movements, and environmental monitoring stations tracking air quality and pollution levels in real-time.

These networks of sensors provide comprehensive data collection capabilities, supporting space weather forecasting systems effectively.

This also enables implementing a "disconnected" mode, for instance when it is not possible or when it is not necessary to use internal space weather data from LEO satellites, for instance due to a communication breakdown between satellites and ground stations.

According to various possible embodiments, the network of sensors can be a swarm of sensors distributed among one or more satellites, said one or more satellites possibly being part of a LEO satellite constellation.

This enables taking into account measurements which are distributed differently from those which would be obtained from only a constellation of LEO satellites, for example to measure parameters based on fluxes or magnetic field values at greater distances than Earth-centered orbits with altitudes of 2000 kilometers.

According to one embodiment, the space weather forecast system further comprises one or more distributed networks connected to the space weather forecast apparatus, the one or more distributed networks being configured to receive third electromagnetic signals from the LEO satellites and to transmit the received third electromagnetic signals to the space weather forecast apparatus.

A computer program is also proposed, comprising instructions for implementing the method according to one of the preceding embodiments, when said instructions are executed by a processor of a computer processing circuit.

Also proposed is an information storage medium, removable or not, partially, or entirely readable by a computer or a processor, comprising code instructions of a computer program for the execution of each of the steps of the method according to any of the preceding embodiments.

### Brief description of the drawings

Other features, embodiments, definitions, and advantages will become apparent upon reading the detailed description below and analyzing the attached drawings, including the following figures.
Figure 1 represents a space weather forecasting system according to one embodiment.
Figure 2 illustrates an architecture for a space weather forecast apparatus, according to one embodiment.
Figure 3 represents, in the form of a flowchart, the steps of a method for dynamically processing data according to one embodiment.
Figure 4 represents, in the form of a flowchart, further steps of a method for uploading and preprocessing the data according to one embodiment.
Figure 5 represents a schematic block diagram of a computer processing circuit according to one embodiment.

Unless otherwise indicated, common or analogous elements in the figures are denoted by the same reference numerals and exhibit identical or analogous features, so that common or analogous elements are generally not described again for the sake of clarity and conciseness.

### Description of the embodiments

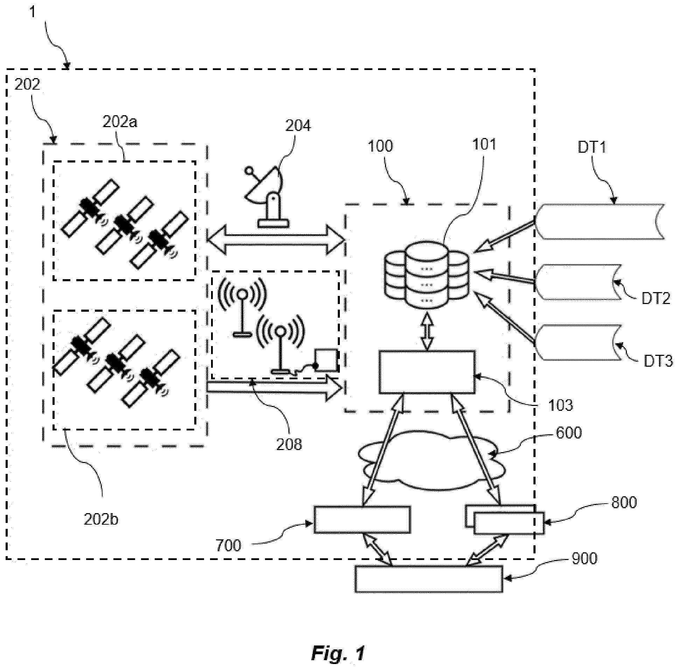

Figure 1 illustrates a forecasting system, which integrates various components for collecting and processing space weather data.

Specifically, this figure shows a space weather forecasting system 1 configured to gather and process space weather data through various external and internal components. The space weather forecasting system 1 includes a Low Earth Orbit, called LEO, satellite constellation 202 which is arranged in multiple orbital planes, for instance at least two orbital planes, so that a corresponding set of satellites is allocated to each orbital plane. In the present case, a first plurality of satellites 202a is configured to collect data over a first orbital plane and a second plurality of satellites 202b is configured to collect data over a second orbital plane.

These satellites are specifically configured to comprise sensors able to collect geomagnetic field data on geomagnetic field and data of fluxes and/or flows of charged particles, enabling subsequently the forecasting of space weather conditions from low Earth orbit. Examples of sensors comprise semiconductor spectrometers and Cherenkov detectors.

In a possible embodiment, geomagnetic field data comprise measurements of the vector components of the Earth's magnetic field, including the magnetic flux density magnetic field intensity, and the rate of change of these quantities.

Herein, the magnetic flux density is preferably measured in nanoteslas (nT). The magnetic field intensity is preferably measured in amperes per meter (A/m) and the rate of change of these quantities, in nanoteslas per second (nT/s).

Herein, the geomagnetic field data is typically obtained using high-precision magnetometers, such as tri-axial fluxgate magnetometers, which can detect rapid changes in the geomagnetic field caused by solar wind interactions and geomagnetic storms.

In a possible embodiment, data of fluxes and/or flows of charged particles comprise particle flux measurements, particle energy measurements, particle velocity measurements and particle density measurements.

Herein, measurements of the particle flux can be measured in particles per square centimeter per second (particles/cm²/s), particle energy can be measured in electron volts (eV) and particle velocity can be measured in kilometers per second, km/s. Particle density is typically measured in particles per cubic centimeter (particles/cm³).

Herein, such measurements can be obtained by instruments such as solid-state spectrometers, electrostatic analyzers, and Faraday cups, which can provide detailed measurements of supra-thermal ions, i.e., ions with energies ranging from 25 keV to 6000 keV, and electron fluxes, e.g., electron fluxes having energies ranging from 25 keV to 250 keV. Such measurements enable determining solar wind conditions and predicting space weather phenomena, including coronal mass ejections, CMEs, and solar energetic particle, SEP, events, which can significantly impact satellite operations and communication systems.

In one embodiment, the satellite constellation consists of satellites in low Earth circular polar orbits, each having an apogee below 1000 km, distributed across at least two orbital planes with different ascending nodes. This ensures that at least one satellite is always within a cusp region of the magnetosphere.

Herein, the polar cusp region of the magnetosphere is defined by a latitude higher than approximately 75 degrees.

This configuration allows continuous forecasting and data collection of space weather phenomena, enhancing the predictive capabilities of the space weather forecasting system.

In a possible embodiment, the number of satellites in each corresponding set allocated to a given orbital plane is selected so that at least one satellite is present inside the polar cusp region of the magnetosphere.

This enables user-oriented high-accuracy short-term forecasts, localized measurements for different orbits, and infrastructure-specific hazard warnings by gathering data on fluxes of charged particles at low orbit, such as in the inner magnetosphere. This in turn can be used to monitor and/or forecast critical space weather parameters.

The space weather forecasting system 1 further comprises one or more ground stations 204 which can emit electromagnetic signals to the LEO satellite constellation 202 and/or to receive electromagnetic signals from the LEO satellite constellation 202.

In a possible embodiment, the ground stations 204 are configured to ensure a regular data flow between the LEO satellite constellation 202 and a space weather forecast apparatus 100, described hereafter. Data processing means comprised in the ground stations facilitate the transfer of data to the space weather forecast apparatus 100.

For instance, the ground stations 204 can comprise or be a network of stations approximately 400 kilometers apart and located in Norway, Sweden, and Finland, said stations being capable of receiving high-frequency radio waves in the range of 200 MHz to 950 MHz, said radio waves being configured to carrying detailed ionospheric data. Other bandwidths can comprise the Ku-band (12-18 GHz), the Ka-band (26.5-40 GHz), etc. with stations strategically positioned several thousand kilometers apart to maintain continuous satellite communication. The ground stations 204 facilitate real-time data relay and communication essential for effective space weather forecasting.

In one embodiment, the satellites comprise payloads, said payloads being adapted to store data. Said payload data can be downloaded via one or more parallel channels. For instance, these parallel channels comprise a general communication channel handled by stationary ground stations with one data download every 12 hours for each satellite, and a low-latency communication channel enabling for a prompt download of high priority data, such as radiation flux dynamics and alerts of incoming events.

This configuration of parallel communication channels ensures timely access to critical space weather information, also allowing for effective and quick responses to space weather phenomena.

The space weather forecasting system 1 further comprises one or more distributed networks 208, which can be directly connected to the one or more ground stations 204 or separated from them.

In a possible embodiment, one of the distributed networks 208 is configured to ensure a real-time data flow from the LEO satellite constellation 202 to the space weather forecast system 100, described hereafter.

The space weather forecasting system 1 further comprises a space weather forecast apparatus 100.

The space weather forecast apparatus 100 comprises one or more servers or databases defining together a central data repository 101, also referred to as the Space Weather Model Data Lake, SWMDL, and which interconnect a set of databases. The central data repository 101 is configured to store various types of space weather data, including additional data provided by external sources connectable to the central data repository 101, such as magnetospheric data DT1, geomagnetic data DT2, and extra-magnetospheric data DT3, said extra-magnetospheric data being also called interplanetary medium state data. Such data can be provided by external sources and be based on past measurements.

The SWMDL 101 is connected to and can exchange data with one or more processing modules 103, said processing modules 103 being part of the space weather forecast apparatus 100, and which can comprise processors and/or storage memories. Said processors and/or storage memories comprise a model core module, which is configured to process the stored data using computational algorithms and space weather models.

The timeseries of the measurements are stored together in the SWMDL 101 with supplementary data such as information about detector positioning in space, calibration features, housekeeping data of the hardware, and data that enable verifying the sources and integrity of the dataset.

The space weather forecast apparatus 100 is also configured to make the processed data accessible through a network 600, such as the internet or a local network, to a user interface 700 such as a graphical user interface, GUI, and/or to one or more application interfaces 800. Preferably, the network 600, the user interface 700 and the one or more application interfaces 800 are part of the space weather forecasting system 1.

In one embodiment, the space weather forecasting system 1 includes one or more application programming interfaces 800, called APIs 800, and which are connected to the space weather forecast apparatus 100 for enabling external user terminals 900 to programmatically access the processed data, which can be space weather forecasts.

This enables a real-time integration of distributed data flow, with a centralized data processing and dissemination mechanism, allowing comprehensive and immediate access to space weather data for end-users, e.g., private, or public user terminals, and enhancing operational efficiency and decision-making processes in fields affected by space weather conditions, such as predicting and forecasting radiation risks on specific assets in space and on the ground, the timing and direction of sun bursts or the likelihood of aurorae borealis.

With a subscription to the platform provided by the space weather forecasting system 1, for instance to the APIs, the system 1 provides access to a user-oriented decision support tool to safely manage the risks of space weather and reduce uncertainties with respect to solar events.

The system offers near real-time forecasting and forecasting of space weather conditions and events, accurate short-term warnings of coronal mass ejection arrivals, interactive space weather data displays via APIs, and tailored risk assessment tools and alerts to determine proper mitigation actions. The system also includes proprietary detectors for satellite operators, which can be used to increase the accuracy of the data and forecasting of radiation awareness.

The entire system is strategically designed to enable continuous forecasting and prompt dissemination of space weather conditions and forecasts, proving essential for applications in satellite operations, aviation, and communication systems. This advanced forecasting system leverages both satellite and ground-based tools to provide a robust approach to space weather forecasting.

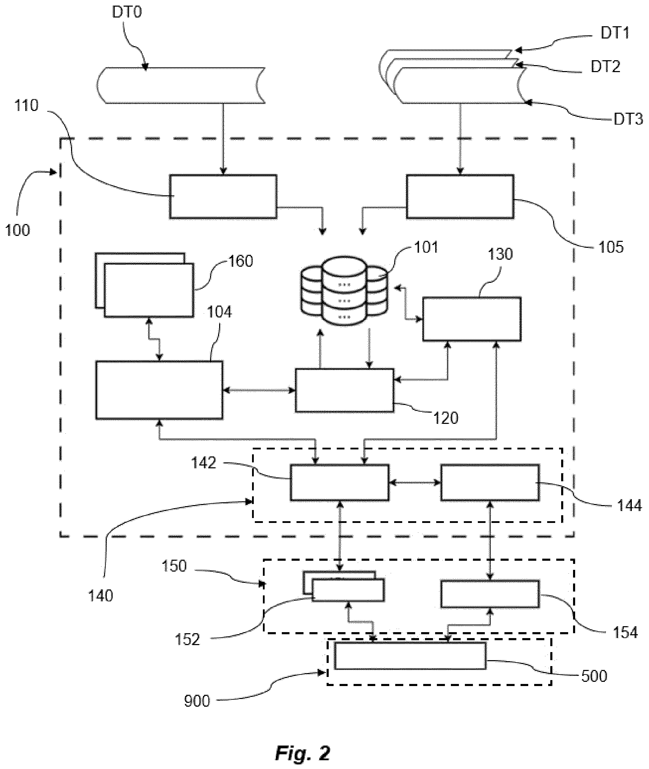

Figure 2 illustrates an architecture for a space weather forecast apparatus, designed to collect, process, and disseminate space weather data from various sources efficiently.

Specifically, the signal and/or data flows are illustrated between the various internal components defining the architecture of the space weather forecast apparatus 100 and allowing interactions with various external components as previously mentioned.

As explained in the following, the architecture of the space weather forecast apparatus 100 defines a "space weather model", fed by both internal and external data sources, and with which external user terminals can interact.

As shown, data DT0 obtained by LEO satellites such as the LEO satellite constellation 202 is provided to the space weather forecast apparatus 100 through a data preprocessing module 110 of the space weather forecast apparatus 100. In parallel, data DT1, DT2 and DT3 provided by external sources can be provided to the space weather forecast apparatus 100 through one or more data uploading modules 105 of the space weather forecast apparatus 100.

In a possible embodiment, input data can be classified depending on its type, said type being for instance selected among the geomagnetic data DT1, the magnetospheric data DT2 and the extra magnetospheric data DT3. Input data can also be classified depending on its source, i.e., internally generated data such as data DT0 gathered from payloads of the space weather forecasting system 1, and external or third-party data.

In a possible embodiment, input data comprises internal data and external data, both being either in a raw form and/or comprising time series data sets. Depending on the source and origin of the data, these data sets can be stored in one or more memories of the central data repository 101, i.e., the SWMDL. The SWMDL 101 thereby defines a level-zero, L0, data set, which can then be processed by an individual program module. This centralized storage facilitates streamlined data management and accessibility for further processing, all data streams being stored in the latter.

Herein, the internal data comprises data DT0 directly provided by Low Earth Orbit measurements currently running in orbit whereas wherein external or third-party data typically comprises previously obtained data which is stored in servers and databases on Earth, said external or third-party data comprising geomagnetic data DT1, magnetospheric data DT2 and extra magnetospheric data DT3, which all provide robust datasets for analyzing space weather conditions.

In a possible embodiment, the external or third-party data can undergo initial standardization and preparation through the data preprocessing module 110 before being uploaded into the central repository 101 via the one or more data uploading modules 105.

The SWMDL 101 interfaces with a dynamical processing module 120 of the space weather forecast apparatus 100, which is configured to carry out initial processing, such as transforming raw data into formats usable by applications installed on dedicated computers or terminals.

The dynamical processing module 120 is further configured to provide the processed data to an extrapolation module 130, the extrapolation module 130 being also connected to the SWMDL 101, enabling recalculation, refinement, and extrapolation of the provided processed data, thereby enhancing data accuracy.

The dynamical processing module 120 is also configured to provide the processed data to a data processing module 104. This enables a continuous recalculation of basic parameters associated to a given configuration of the near-Earth environment, e.g., based on updates of the measurements of the magnetosphere, geomagnetic environment, interplanetary medium state, the Sun, and other parameters if needed. The results of the analysis are stored in the SWMDL 101 for further access.

In one embodiment, at least one of the modules 104, 105, 110, 120, 130 is comprised in the one or more processing modules 103 of the SWMDL 101.

In a possible embodiment, the data processing module 104 comprises a model database and calculation scripts configured to perform comprehensive data analysis. The model database itself can have access to numerical geophysical models 160 that can be used by said calculation scripts.

In a possible embodiment, the space weather forecast apparatus 100 is configured to ensure that data is accessible to external users. Specifically, this access enables user interaction with the space weather forecast apparatus 100 via a query manager 142 within the user interface, UI, backend 140 of the space weather forecast apparatus 100. This query manager 142 interfaces with a web portal 144 of the UI backend 140, thereby enabling users to access and interact with the processed data online.

The query manager 142 is configured to manage data queries, facilitating interaction between the data processing modules 110 and 105, as well as the UI frontend 150 described hereafter.

In a possible embodiment, for direct customer interaction, a UI frontend 150 can be connected to the UI backend 140, said UI frontend 150 comprising dedicated APIs 152 and a dedicated user interface 154, to both of which one external user terminal 500 can access among a plurality of user terminals 900. The dedicated APIs 152 allow external systems and applications to access the processed data and services while the dedicated user interface 154 provides the frontend through which end-users can interact with the space weather forecast apparatus 100.

This architecture enables external users to access and utilize the space weather data processed by the space weather forecast apparatus 100 and, ultimately, provided by the space weather forecasting system 1. Since the system architecture integrates a UI backend and a query manager, it is possible to efficiently handle queries and data retrieval processes from the UI frontend. The web portal 144 can further serves as a primary user interface to interact with the space weather forecast apparatus 100. Additionally, the APIs allow seamless data retrieval and system interaction, enabling users to access up-to-date space weather information and forecasts. Accurate and timely space weather data is thereby provided for various applications, ranging from satellite operations to aviation safety.

The components of this architecture are also designed to ensure accurate, real-time data processing and dissemination, facilitating a robust and efficient space weather forecasting and analysis system. This configuration also enables a comprehensive integration of real-time data flow with centralized processing and dissemination mechanisms, providing complete and immediate access to space weather data for end-users, enhancing operational efficiency in fields affected by space weather conditions.

The fact that this architecture comprises or has access to numerical geophysical models enable the possibility for users of the space weather forecast apparatus 100 to simulate and predict space weather scenarios using the stored data, said simulated and predicted space weather scenarios being herein called "space weather forecasts". The dynamical processing module 120 enables the handling of ongoing data analysis and model updates, ensuring the system adapts to new data inputs dynamically and efficiently, providing reliable space weather predictions.

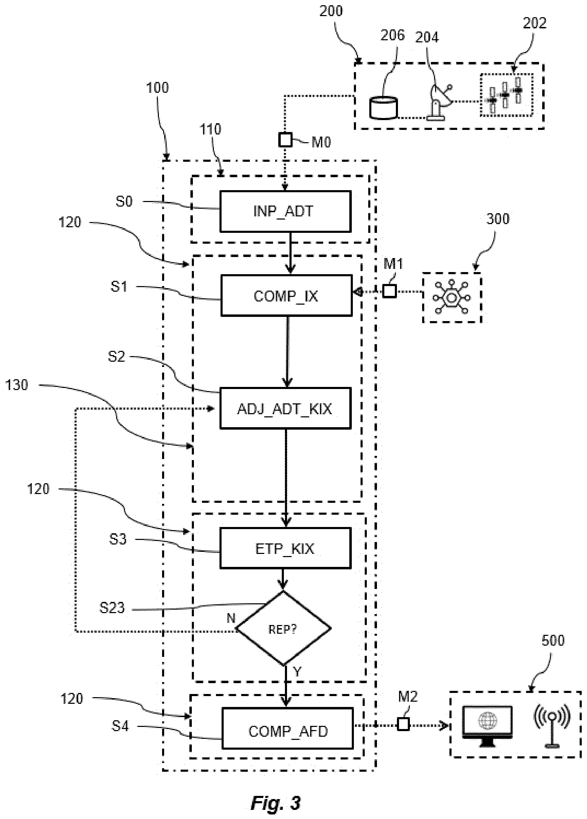

Figure 3 represents a sequence of method steps for dynamically processing data according to one embodiment, in view of forecasting space weather conditions.

Specifically, steps S0, S1, S2, S3, S23 (optional) and S4 are shown in the form of a flowchart and are implemented by or in the space weather forecast apparatus 100.

As illustrated, step S0 can be carried out by the data preprocessing module 110 of the space weather forecast apparatus 100. Although other hardware components could also carry out these steps, steps S1, S2 and S4 can be carried out by the dynamical processing module 120 of the space weather forecast apparatus 100. Similarly, steps S3, S4 and S23 can be carried out by the extrapolation module 130 of the space weather forecast apparatus 100. According to possible embodiments, any or all the steps can be carried out by a computer processing circuit of said elements.

During a preliminary step S0, also called "INP_ADT", asynchronous data is inputted in the space weather forecast apparatus 100, for instance through a message M0 received from external sources 200. This enables collecting data from various asynchronous sources, for processing said data in real-time, with the advantage to ensure timely updates.

This step and the next ones are adapted to handle various types of data, including geomagnetic data, magnetospheric data, interplanetary medium state data, and technical data/metadata.

In one embodiment, the space weather forecast apparatus 100 and/or its SWMDL 101 comprises or can handle a timescale database which facilitates the organized storage and efficient retrieval of large volumes of data necessary for space weather analysis and forecasting.

In one embodiment, the external sources 200 can comprise one or more external servers 206, one or more ground stations 204 as previously described and/or one or more satellites 202.

In an embodiment, data might have already been received by the space weather forecast apparatus 100 and saved therein, so that the preliminary step S0 is optional. This allows the method to be implemented locally or disconnected from other networks.

During a step S1, also called "COMP _IX", following step S0 when carried out, secondary indices are computed from the initial data input. These calculations form the basis for further analysis and forecasting.

For instance, geomagnetic data encompasses primary indices time series and electromagnetic field or electromotive force related data time series. The method processes this data to produce time series that serve as a foundation for subsequent analytical steps.

In an embodiment, the computation can also be based on alerts received from an external space weather alert generator 300, said alerts being transmitted to the space weather forecast apparatus 100, and more specifically to the dynamical processing module 120 of the space weather forecast apparatus 100, through one or more alert messages M1.

For instance, magnetospheric data includes radiation fluxes time series. This data is subjected to radiation fluxes extrapolation, which involves the creation of an anchor grid time series. The anchor grid serves as a reference framework for further spatial and temporal analysis. The processed radiation fluxes data is then used in anchor grid calculation, an important step for refining the spatial distribution and understanding of radiation patterns in the magnetosphere.

During a step S2, also called "ADJ ADT_KIX", following step S1, key indicators are adjusted based on the calculated secondary indices and any corrected forecast errors. This enables a fine-tuning of the indices, providing subsequently for a more accurate forecasting.

In an embodiment, the adjusting step S2 also adjusts for errors identified in the previous forecasting steps. By correcting these errors, the accuracy of the forecast is improved, thereby improving future predictions. If the adjusting step corrects said errors, the key indicators as adjusted can also be adjusted based on the corrected forecast errors

During a step S3, also called "ETP_KIX", following step S2, an extrapolation of the key indicators is performed to predict future space weather conditions, this being based on the adjusted key indicators.

For instance, data and metadata can include Coronal Mass Ejection, CME, alerts defining secondary indices time series, indicators time series, and enabling respective forecasts. CME alerts can be integrated into the forecasting method to provide timely warnings about potentially disruptive solar events. These alerts contribute to the calculation of secondary indices, which are further analyzed and forecasted to provide comprehensive insights into space weather conditions.

Optionally, an iteration of the previous steps S2 and S3 can be carried out by implementing the step S23, also called "REP?". This decision point can involve a manual input or an automatic input based on a threshold condition, for instance to require a predetermined accuracy, a predetermined size of input data or a predetermined number of secondary indices, said input being a condition positively fulfilled indicated by "Y" or not being fulfilled, as indicated by "N". If the condition is not fulfilled, steps S2 and S3 are (re-)iterated until the aforementioned condition becomes fulfilled and/or after a predetermined amount of time has lapsed.

Regular recalculation of secondary indices ensure that the data remains up-to-date and accurate, maintaining the reliability of the forecasts and analyses produced by the system. The secondary indices are calculated using advanced algorithms that consider the latest available data.

If the "Y" condition is fulfilled during step S23, or if said step S23 is not carried out, a step S4, also called "COMP_AFD" is carried out. Specifically, step S4 comprises recalculating data based on the key indicators, with a view to ensure the reliability of the space weather forecasts. The results can then be used to generate alerts.

In a possible embodiment, the step S4 involves generating one or more space weather alert messages M2, which can subsequently be send to devices external to the space weather forecast apparatus 100.

For instance, the space weather forecast apparatus 100 can send these generated space weather alerts to one or more user terminals 500, possibly connected to other networks and infrastructures, providing real-time alerts and insights. This enhances operational efficiency and decision-making processes in fields affected by space weather conditions, such as satellite operations and telecommunications.

In a possible embodiment, one or more steps of the method can involve machine learning-based algorithms, increasing its analytical capabilities. These algorithms are adapted to perform spatial distribution analysis, local forecasting, solar wind flux analysis, and cosmic ray flux extrapolation. The results of these analyses can feed into the extrapolation and prediction of secondary indices. The spatial distribution analysis helps in understanding the geographical spread of space weather effects, while local forecasting provides region-specific predictions. For instance, solar wind flux analysis and cosmic ray flux extrapolation contribute to the overall predictive accuracy of the system.

A method defined by a sequence of the steps S0 to S4 enables an accurate processing of the provided data to be prepared, which is cleaned and corrected automatically. For example, geomagnetic data, magnetospheric data and extra magnetospheric data collected by satellites in Low Earth Orbit is preprocessed to remove noise and correct errors. Relying on this forecasting of highly energetic particles such as protons and electrons, it is then possible to merge said data with metadata and support data, subsequently performing interpolations and averages with all weights and errors stored as additional metadata. Merged and cleared data is then analyzed, enabling regular alerts checks and as input for physical modelling.

This also enables converting the data from time series to a spatial grid, where spatial distributions and anisotropy are analyzed using techniques such as Kalman filters and Fourier transforms. These steps ensure high accuracy in spatial distributions, providing reliable space weather forecasting and risk assessment.

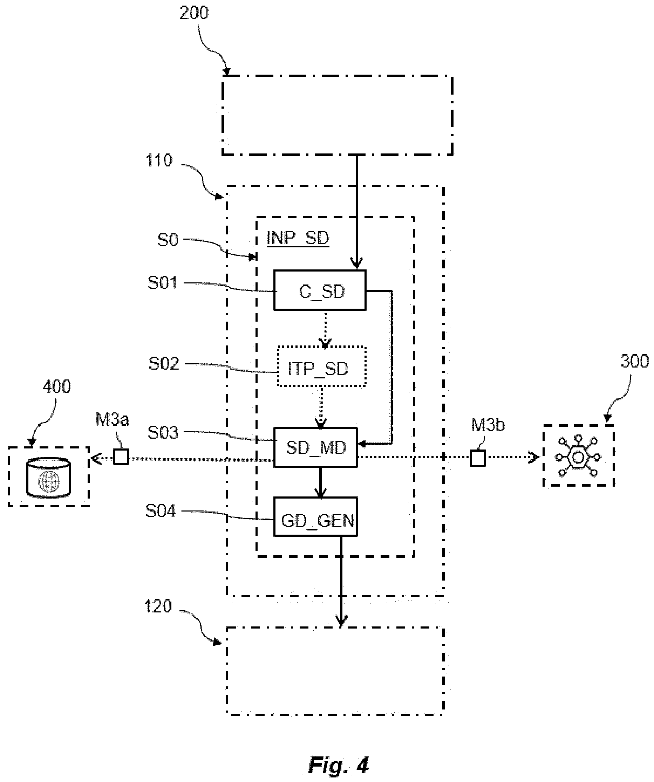

Figure 4 represents optional method sub-steps for uploading and preprocessing the data which is dynamically processed as described in previous steps S0 to S4.

Specifically, it is shown how the data can be uploaded and preprocessed depending on its source and entry time, then possibly added to the previous steps S0 to S4.

In the represented embodiment, this uploading and preprocessing of the data is illustrated as sub-steps S01, S02, S03 and S04 of the inputting step S0, but can also be carried out after the inputting step S0, for instance during the optional step S23 comprising a calculation loop of secondary indices.

In one embodiment, the resulting parameters can have predefined weights together with previously extrapolated ones and are being source for next step extrapolation.

Specifically, sub-steps S01, S02, S03 and S04 are shown in the form of a flowchart and are implemented by or in the data preprocessing module 110 of the space weather forecast apparatus 100.

Following the inputting of space weather data from external sources 200, and during a first sub-step S01, also called "C_SD", the uploading/preprocessing is initiated and comprises, during the first sub-step S01, correcting and cleaning the data to ensure its accuracy and reliability.

During an optional second sub-step S02, also called "ITP_SD", data interpolation is performed to fill in gaps and create a continuous data set.

During a third sub-step S03, also called "SD_MD", the cleaned and interpolated data is then merged with metadata, incorporating additional relevant information.

Optionally, the data preprocessing module 110 can also send data, for instance the cleaned and interpolated data and/or the merged data/metadata, to external devices. For instance, the merged data/metadata sets can be sent through a modelling message M3a intended to a modelling generator 400 and/or the merged data/metadata sets can be sent through an alert message M3b intended to the space weather alert generator 300.

In an advantageous embodiment, the modelling generator 400 is comprised in the space weather forecast system 1 and/or in the space weather forecast apparatus 100, enabling a direct transformation of the merged data into visual data and actionable insights, ensuring that the processed information is effectively utilized for space weather predictions. This also enhances the overall accuracy and reliability of the space weather forecasts by enabling continuous updates and refinements based on the latest data inputs.

Accordingly, the provided merged data/metadata sets can be used for generating alerts and further modeling. This enables real-time generation of alerts and/or modelling, based on accurate data processing and dissemination.

During a fourth sub-step S04, also called "GD_GEN", a spatial grid is generated and/or extrapolated further in view of creating a comprehensive spatial representation. Said generated spatial grid can subsequently be sent to the dynamical processing module 120.

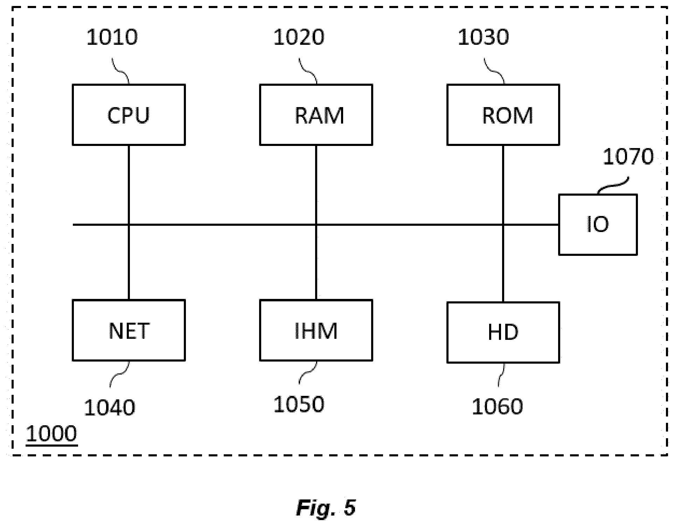

Figure 5 represents a schematic block diagram of a computer processing circuit according to one exemplary implementation of the embodiments described.

In an embodiment, the computer processing circuit is configured to carry out any of the steps of the previously described space weather forecasting method.

In an embodiment, the computer processing circuit 1000 is comprised in the space weather forecast apparatus 100 and can be more specifically comprised in the central data repository 101, also referred to as the SWMDL, or in one of more of the processing modules 103.

As described, said computer processing circuit 1000 comprises at least one processor and at least one memory.

In different examples, the computer processing circuit 1000 is a system on chip arranged to implement a method for controlling an edge computing network.

Preferably, and since the computer processing circuit 1000 is intended for implementation in ground-based hardware, the computer processing circuit 1000 is preferably an integrated processing system and/or a ground-based hardware, which is/are configured for receiving, processing, and forecasting space weather data.

The various terms used herein can also encompass the case of a system on chip, given the technical advantage of being able to miniaturize the modules described so far, for example, for integration into a portable device or the payload of a satellite.

In a non-limiting manner, the computer processing circuit 1000 comprises a communication bus connected, for example, to a central processing unit 1010, such as a processor or a microprocessor, and denoted CPU.

The computer processing circuit 1000 further comprises a random-access memory 1020, denoted RAM, able to store the executable code of the control method as well as registers suitable for saving variables and parameters necessary for implementing the method according to some embodiments, the memory capacity thereof possibly being supplemented by an optional RAM memory connected to an expansion port, for example.

In addition, the computer processing circuit 1000 comprises a read-only memory 1030, denoted ROM, for storing computer programs for implementing the embodiments described above, as well as a network interface 1040 which is normally connected to a communication network over which are sent or received the digital data to be processed.

The network interface 1040 may be a single network interface or may be composed of a set of different network interfaces (e.g. wired and wireless, interfaces or different types of wired or wireless interfaces).

Data packets are sent over the network interface for transmission or are read from the network interface for reception, and under the control of the software application executed in the processor or microprocessor 1010.

Furthermore, the computer processing circuit 1000 comprises a user interface 1050 for receiving inputs from a user or for displaying information to a user, an optional storage medium 1060 denoted HD, and an input-output module 1070 denoted IO, for receiving/sending data from or to external devices such as a hard disk, a removable storage medium, or others.

In an example presented here, the executable code may be stored in read-only memory 1030, on the storage medium 1060, or on a digital removable medium such as a disc for example.

According to a variant, the executable code of the programs may be received by means of a communication network, via the network interface 1040, to be stored in the storage medium 1060, before being executed.

The central processing unit 1010 is suitable for controlling and directing the execution of instructions or software code portions of the program or programs according to one of the embodiments, these instructions being stored in dedicated storage means. After powering on, the CPU 1010 can execute instructions stored in the main RAM memory 1020, relating to a software application, after these instructions have been loaded from ROM for example.

In the example shown here, the computer processing circuit 1000 is a programmable device that uses software. However, alternatively, this description may be implemented in any type of hardware (for example, in the form of a dedicated integrated circuit or ASIC).

Advantageously, the various components of the computer processing circuit 1000 enable efficient execution of the aforementioned steps of the space weather forecasting method. The central processing unit 1010 controls the execution of these steps, starting with data preprocessing during step S0. For instance, one or several CPUs can process the secondary indices during step S1, adjust the forecast errors in step S2, and extrapolate key indicators in step S4, the necessary date being stored in the RAM 1020 and executing instructions from ROM 1030. The network interface 1040 facilitates the reception of external alerts, integrating them into the forecast process, while the user interface 1050 and IO module 1070 handle user inputs and data outputs. One or more of the storage medium 1060 provide additional storage for large datasets, enhancing the capability of the apparatus 100 to manage extensive space weather data. The integration of these components further enables seamless execution of complex calculations and real-time updates.

Although the present disclosure and the embodiments described therein have been shown and described with reference to specific preferred embodiments, this is not to be construed as limiting the invention itself. Various changes may be made in form and details without departing from the scope of the invention as defined by the appended claims.

## Claims

1. A computer-implemented method for space weather forecasting, comprising the steps of:
a) inputting (S0), internal space weather data (DTO) and external space weather data (DT1, DT2, DT3), said internal space weather data (DTO) being provided by Low Earth orbit, LEO, satellites (202), said external space weather data (DT1, DT2, DT3) being provided by ground-based databases, the providing of the internal space weather data (DTO) and of the external space weather data (DT1, DT2, DT3) being carried out through one or more space weather data messages (M0),
b) computing (S1) secondary key indices from primary key indices comprised in the inputted internal space weather data (DTO) and in the external space weather data (DT1, DT2, DT3),
c) adjusting (S2) the primary key indices based on the computed secondary indices,
d) extrapolating (S3) the adjusted primary key indices to predict future space weather events, and
e) generating (S4) one or more space weather event messages (M2) comprising the extrapolated adjusted key indicators and/or the predicted future space weather data.

2. The computer-implemented method according to claim 1, wherein the generating step e) comprises sending, to one or more user terminals (500), the one or more space weather event messages (M2) to one or more user terminals (500).

3. The computer-implemented method according to claim 1 or 2, further comprising, after the adjusting step c) (S2), an iteration step (S23) comprising repeating the computing step b) (S1) and the adjusting step c) (S2) until a predetermined condition or threshold is fulfilled and/or after a predetermined amount of time has lapsed.

4. The computer-implemented method according to any of the preceding claims, wherein the inputting step (S0) comprises the following sub-steps:
a1) uploading and preprocessing (S01) the inputted space weather data to correct errors in said inputted space weather data,
a3) merging (S03) the preprocessed space weather data with provided data/metadata sets, and
a4) creating (S04) a spatial grid based on the merged data to provide a spatial representation of said merged data to user terminals, said user terminals comprising a graphical user interface.

5. The computer-implemented method according to claim 4, wherein the inputting step (S0) further comprises the sub-step of a2) interpolating (S02) the preprocessed space weather data to create a continuous data set, the sub-step a2) (S02) being carried out after the uploading and preprocessing sub-step a1) (S01) and before the merging sub-step a3) (S03), the merging sub-step a3) (S03) being replaced by the sub-step a31) of merging (S03) the created continuous data set with provided data/metadata sets.

6. The computer-implemented method according to any of the preceding claims, wherein the merging sub-step a3) (S03) further comprises sending a modelling message (M3a) intended for a modelling generator (400) and/or sending an alert message (M3b) intended for a space weather alert generator (300), the modelling message (M3a) or the alert message (M3b) comprising the preprocessed space weather data, the provided data/metadata sets and/or the merging of the preprocessed space weather data and of the provided data/metadata sets.

7. A space weather forecast apparatus (100) comprising:
- a receiver module (105, 110) configured to receive internal space weather data (DTO) and external space weather data (DT1, DT2, DT3), said internal space weather data (DTO) being provided by Low Earth orbit, LEO, satellites (202), said external space weather data (DT1, DT2, DT3) being provided by ground-based databases, the providing of the internal space weather data (DTO) and of the external space weather data (DT1, DT2, DT3) being carried out through one or more space weather data messages (M0),
- a central data repository (101), configured to process the received internal space weather data (DTO) and the received external space weather data (DT1, DT2, DT3), said processing comprising the computation of secondary key indices from primary key indices comprised in the received internal space weather data (DTO) and in the received external space weather data (DT1, DT2, DT3), and
- one or more processing modules (103), configured to adjust the primary key indices based on the computed secondary indices, to extrapolate the adjusted primary key indices to predict future space weather events (S3), and to generate one or more space weather event messages (M2) comprising the extrapolated adjusted key indicators and/or the predicted future space weather data.

8. The space weather forecast apparatus (100) according to claim 7, wherein the receiver module (105, 110) comprises:
- one or more data uploading modules (105), and
- a data preprocessing module (110),
the one or more data uploading modules (105) being configured to standardize the external space weather data (DT1, DT2, DT3) and to upload the standardized external space weather data (DT1, DT2, DT3) into the central data repository (101).

9. The space weather forecast apparatus (100) according to claim 7 or 8, wherein the one or more processing modules (103) comprise a dynamical processing module (120) interfaced with the central data repository (101), an extrapolation module (130) interfaced with the dynamical processing module (120) and the central data repository (101), and a data processing module (104) interfaced with the dynamical processing module (120), the data processing module (104) having access to a model database of numerical geophysical models (160).

10. The space weather forecast apparatus (100) according to any of claims 7 to 9, comprising a User Interface, Ul, backend (140), configured to provide, to a UI frontend (150) connected to the UI backend (140) of the space weather forecast apparatus (100), the one or more space weather event messages (M2), the extrapolated adjusted key indices and/or the predicted future space weather data.

11. The space weather forecast apparatus (100) according to any of claims 7 to 10, wherein said space weather forecast apparatus (100) is adapted to be installed aboard a LEO satellite.

12. A space weather forecast system (1), comprising:
- the space weather forecast apparatus (100) according to any of claims 7-11,
- a plurality of the LEO satellites (202), and
- one or more ground stations (204) connected to the space weather forecast apparatus (100), the one or more ground stations (204) being further configured to send first electromagnetic signals to the LEO satellites (202), to receive second electromagnetic signals from the LEO satellites (202) and to transmit the received second electromagnetic signals to the space weather forecast apparatus (100).

13. The space weather forecast system (1) according to claim 12, further comprising one or more distributed networks (208) connected to the space weather forecast apparatus (100), the one or more distributed networks (208) being configured to receive third electromagnetic signals from the LEO satellites (202) and to transmit the received third electromagnetic signals to the space weather forecast apparatus (100).

14. A processing circuit comprising a processor and a memory, the memory storing program code instructions of a computer program for implementing the method according to any of claims 1-7, when the instructions are executed by the processor of the processing circuit.

15. A non-transitory storage medium, removable or not, partially or entirely readable by a computer or a processor, comprising code instructions of a computer program for the execution of the method according to any of claims 1-7.
